# EUROPÄISCHE PATENTANMELDUNG

(11) **EP 3 993 253 A1**
(43) Veröffentlichungstag der Anmeldung: **04.05.2022**
(21) Anmeldenummer: 20204138.0
(22) Anmeldetag: 27.10.2020
(51) Int. Cl.: H02M 7/5387

(54) **STROMTOLERANZBANDREGELUNG MIT TOTZEITEN ZUR UNTERDRÜCKUNG VON SCHWINGUNGSBEDINGTEN FEHLSCHALTUNGEN IN EINEM UMRICHTER**

(71) Anmelder: Wobben Properties GmbH, 26607 Aurich (DE)
(72) Erfinder: HEYEN, Christian, 26607 Aurich (DE); BAKKER, Menko, 26605 Aurich (DE)
(74) Vertreter: Eisenführ Speiser

(57) **Zusammenfassung**

Die vorliegende Erfindung betrifft ein Verfahren zum Steuern eines Stromrichters, insbesondere eines Wechselrichters, bevorzugt eines Umrichters, umfassend einen Wechselrichter, insbesondere einer Windenergieanlage, umfassend die Schritte: Vorgeben eines Toleranzbandes mit wenigstens einer Bandgrenze für den Stromrichter, insbesondere für ein Schaltmittel des Stromrichters, Vorgeben einer Verzögerung umfassend eine Totzeit, insbesondere für das Schaltmittel des Stromrichters, Erfassen eines Ist-Stromes des Stromrichters, insbesondere eines Ist-Stromes des Schaltmittels des Stromrichters, Abgleichen des erfassten Ist-Stromes mit der Bandgrenze, um ein Verlassen des Toleranzbandes festzustellen, Schalten des Stromrichters, insbesondere des Schaltmittels des Stromrichters, um innerhalb des Toleranzbandes zu gelangen, Unterdrücken weiterer, insbesondere nicht-systemrelevanter, Schalthandlungen des Stromrichters, insbesondere des Schaltmittels, für die vorgegebene Totzeit.

## Beschreibung

Die vorliegende Erfindung betrifft einen Stromrichter, insbesondere einen Leistungsumrichter einer Windenergieanlage, sowie ein Verfahren zum Steuern eines solchen Stromrichters.

Stromrichter sind ruhende elektrische Geräte zur Umwandlung einer elektrischen Stromart (Gleichstrom, Wechselstrom) in die jeweils andre, oder zur Änderung charakteristischer Parameter, wie bspw. der Amplitude oder der Frequenz.

Zu den Stromrichtern gehören Gleichrichter, Wechselrichter, Umrichter und Gleichspannungswandler.

Ein Gleichrichter wandelt Wechselstrom in Gleichstrom um.

Ein Wechselrichter wandelt Gleichstrom in Wechselstrom um.

Ein Umrichter wandelt einen ersten Wechselstrom in einen zweiten Wechselstrom um.

Ein Gleichspannungswandler wandelt eine erste Gleichspannung in eine zweite Gleichspannung um.

Die Wandlung der Stromart wird bei Umrichtern generell mit Hilfe elektronischer Bauelemente auf Basis von Halbleitern, wie bspw. IGBTs, ausgeführt.

Im Bereich der elektrischen Energieerzeugung, wie bspw. bei Windenergieanlagen, werden zumeist Stromrichter mit einer komplexen Topologie eingesetzt, die bspw. eine Vielzahl von parallelen, dreiphasigen Wechselrichtern umfassen, um den von der Windenergieanlage erzeugten elektrischen Strom in ein elektrisches Versorgungsnetz einzuspeisen.

Die Schaltmittel solcher Stromrichter werden dabei zumeist über Schaltsignale betätigt, die mittels eines Ansteuerverfahrens, wie bspw. einem Toleranzbandverfahren, generiert werden.

Auf Grund der Topologie des Stromrichters, bspw. durch den Parallelbetrieb mehrerer Wechselrichter an einem gemeinsamen Zwischenkreis und/oder durch vor- bzw. nachgelagerter Filterelemente, kann es zu Schwingungseffekten innerhalb des Stromrichters kommen, die zu unnötigen Schalthandlungen der Schaltmittel führen, was wiederum zu hohen Verlusten innerhalb des Stromrichters führen kann.

Aufgabe der vorliegenden Erfindung ist es daher, eines der obengenannten Probleme zu adressieren. Insbesondere soll eine Möglichkeit geschaffen werden, unnötige Schalthandlungen innerhalb von Stromrichtern zu minimieren, insbesondere bei gleichbleibend hoher Qualität des, durch den Stromrichter erzeugten Stromes. Zumindest soll aber eine Alternative zu bisher Bekanntem bereitgestellt werden.

Erfindungsgemäß wird somit ein Verfahren zum Steuern eines Stromrichters, insbesondere eines Wechselrichters, bevorzugt eines Umrichters umfassend einen Wechselrichter, insbesondere einer Windenergieanlage, vorgeschlagen, umfassend die Schritte: Vorgeben eines Toleranzbandes mit wenigstens einer Bandgrenze für den Stromrichter, insbesondere für ein Schaltmittel des Stromrichters, Vorgeben einer Verzögerung umfassend eine Totzeit, insbesondere für das Schaltmittel des Stromrichters, Erfassen eines Ist-Stromes des Stromrichters, insbesondere eines Ist-Stromes des Schaltmittels des Stromrichters, Abgleichen des erfassten Ist-Stromes mit der Bandgrenze, um ein Verlassen des Toleranzbandes festzustellen, Schalten des Stromrichters, insbesondere des Schaltmittels des Stromrichters, um innerhalb des Toleranzbandes zu gelangen, Unterdrücken weiterer, insbesondere nicht-systemrelevanter, Schalthandlungen des Stromrichters, insbesondere des Schaltmittels, für die vorgegebene Totzeit.

Das Verfahren wird somit bevorzugt dafür verwendet, einen Stromrichter, insbesondere einen Umrichter, einer Windenergieanlage anzusteuern. Hierfür weist der Stromrichter bevorzugt eine Steuereinheit auf, die dazu eingerichtet ist, ein Ansteuerverfahren auszuführen, welches Schaltsignale erzeugt, mittels derer die Schaltmittel betätigt bzw. gesteuert werden können. Die Schaltmittel basieren dabei bevorzugt auf Halbleiterelementen.

Der Stromrichter ist zudem bevorzugt als Leistungsumrichter einer Windenergieanlage ausgebildet, d.h. der Stromrichter ist ein Umrichter oder Wechselrichter, der dazu eingerichtet ist, die, von einem Generator der Windenergieanlage erzeugte elektrische Leistung in ein elektrisches Versorgungsnetz einzuspeisen.

Hierfür weist der Stromrichter bspw. einen, mit einem Generator der Windenergieanlage elektrisch verbundenen Gleichrichter auf, der wiederum mit einem Wechselrichter elektrisch verbunden ist. Der Wechselrichter ist zudem bevorzugt über einen Transformator mit einem elektrischen Versorgungsnetz oder einem elektrischen Windparknetz verbunden. Bevorzugt weist der Stromrichter zudem zwischen dem Gleichrichter und dem Wechselrichter einen Gleichspannungszwischenkreis auf.

Der Wechselrichter weist zudem bevorzugt eine Vielzahl von Schaltmitteln, wie bspw. IGBTs, auf, die bevorzugt mittels einer Steuereinheit so angesteuert werden, dass durch den Wechselrichter ein dreiphasiger Wechselstrom erzeugt wird.

Das Ansteuern der Schaltmittel erfolgt dabei bevorzugt mittels eines Toleranzbandverfahrens.

Unter einem Toleranzbandverfahren ist dabei insbesondere eine Hysterese-Regelung zu verstehen, die eine obere Grenze, obere Bandgrenze, und eine untere Grenze, untere Bandgrenze, aufweist. Dabei definieren die obere und die untere Grenze denjenigen Bereich, in dem sich der Strom des Wechselrichters, insbesondere des entsprechenden Schaltmittels, aufhalten darf. Werden diese Grenzen durch Überschreiten eines Ist-Stromes verletzt, werden durch Schalthandlungen der Schaltmittel die Potentiale derart beeinflusst, dass der Strom wieder innerhalb der Grenzen gelangt.

Es wird also insbesondere vorgeschlagen, einen Leistungsumrichter einer Windenergieanlage mit einem Toleranzbandverfahren zu steuern.

In einem ersten Schritt wird hierfür ein Toleranzband mit einer oberen und einer unteren Bandgrenze vorgegeben.

Das Toleranzband wird dabei insbesondere dazu verwendet, die Schaltmittel einer Phase des Stromrichters, insbesondere des Wechselrichters, anzusteuern.

Zudem wird eine Verzögerung vorgegeben, die eine Totzeit umfasst.

Die Verzögerung ist dabei insbesondere dazu vorgesehen, etwaige Schalthandlungen des Schaltmittels zu unterdrücken.

Bevorzugt wird die Verzögerung bzw. die Totzeit auch dazu verwendet, dass eine Änderung eines Stromes in einer anderen Phase bei einer Schalthandlung des Schaltmittels nicht zu einer Schalthandlung in der anderen Phase führt. Die Verzögerung bzw. die Totzeit unterdrückt also auch Schalthandlungen in anderen Schaltmitteln anderer Phasen, wenn diese ansonsten durch die Schalthandlung des Schaltmittels ausgelöst werden würden.

Die Dauer des Unterdrückens der Schalthandlungen wird dabei insbesondere mit der Totzeit eingestellt. Die Totzeit ist hierfür bevorzugt frei einstellbar.

Ferner wird der Ist-Strom des Stromrichters, insbesondere der Ist-Strom des Schaltmittels, erfasst.

Dieser so erfasste Ist-Strom wird mit den vorgegebenen Bandgrenzen abgeglichen, insbesondere um ein Verlassen des Toleranzbandes festzustellen, wobei die Schaltmittel des Stromrichters mittels der Steuereinheit so gesteuert werden, dass der Ist-Strom innerhalb des Toleranzbandes bleibt bzw. in dieses zurückgelangt.

Sofern der erfasste Ist-Strom das Toleranzband verlässt, wird insbesondere vorgeschlagen, weitere Schalthandlungen, insbesondere nicht-systemrelevanter Schalthandlungen, des Stromrichters, insbesondere der Schaltmittel, für die vorgegebene Totzeit zu unterdrücken.

Es wird also insbesondere vorgeschlagen, nach Verlassen des Toleranzbandes durch den Ist-Strom Schalthandlungen für eine vorgegebene Totzeit zu unterdrücken. Das Unterdrücken der Schalthandlungen erfolgt aber insbesondere nicht für system-relevante Schalthandlungen, wie bspw. Schalthandlungen für den Eigenschutz oder Schalthandlungen gegen Über-Strom.

Das Unterdrücken der Schalthandlungen ist dabei bevorzugt mittels einer Software innerhalb der Steuereinheit des Stromrichters implementiert, auch bspw. mittels einer hardwarenahen Programmierung, wie einem FPGA-Design.

Durch das vorgeschlagene Verfahren, insbesondere die Totzeit, wartet die Regelung kurzzeitig ab, welchen Verlauf der Ist-Strom nach einer Schalthandlung einnimmt. Hierdurch können insbesondere unnötige Schalthandlungen vermieden werden, die durch etwaige Schwingkreise verursacht werden, wie bspw. Regelungsschwingkreise oder LC-Glieder am Ausgang des Stromrichters.

Bevorzugt wird zum Unterdrücken weiterer Schaltsignale ein Unterdrückungssignal verwendet, welches von der Steuereinheit mit dem Schaltsignal an das Schaltmittel versandt wird. Die Steuereinheit versendet also stets Signale umfassend ein Steuersignal und ein Unterdrückungssignal, wobei das Unterdrückungssignal die Totzeit umfasst. Dies kann bspw. mittels eines Toleranzbandreglers und einer Soll-Schaltsignalregelung realisiert werden, die auf einem, insbesondere dem gleichen, FPGA implementiert ist.

In einerweiteren Ausführungsform kann die Verzögerung bspw. mittels eines Flipflops oder Setzen-Rücksetzen-Gliedes (kurz: SR-Glied) umgesetzt sein.

Die Totzeit wird dabei bevorzugt derart an die Topologie des Stromrichters angepasst, dass besonders effektiv unnötige Schalthandlungen vermieden werden. Die Totzeit ist also insbesondere eine bewusst gewählte und implementierte Verzögerung, die von etwaigen Signallaufzeiten zu unterscheiden ist.

Vorzugsweise wird die Totzeit größer gewählt als eine Zeitkonstante eines generator- oder netzseitigen Schwingkreises des Stromrichters.

Da sowohl an einem Eingang als auch an einem Ausgang des Stromrichters weitere elektronische Bauteile angeschlossen sind, wie bspw. Filter, Drosseln, Generatoren und/oder elektrische Netze, kommt es sowohl am Eingang als auch am Ausgang des Stromrichters zur Ausbildung von Schwingkreisen.

Es wird also insbesondere auch vorgeschlagen, die Totzeit unter Berücksichtigung dieser Schwingkreise einzustellen, insbesondere so, dass die Totzeit größer ist als die Zeitkonstante dieser Schwingkreise, bspw. beträgt die Totzeit einige Perioden (kleiner 10), bevorzugt eine Periode, weiter bevorzugt eine halbe Periode.

Vorzugsweise wird die Totzeit kleiner gewählt als eine Zeitkonstante, die zu einer virtuellen Vergrößerung des Toleranzbandes um mehr als 10 Prozent, insbesondere 15 Prozent, 25 Prozent, führt.

Durch das Verwenden einer Totzeit kommt es zu einer virtuellen Vergrößerung des Toleranzbandes, insbesondere da unterdrückte Schalthandlungen evtl. später vorgenommen werden, sofern bspw. nach der Verzögerung der Ist-Strom immer noch außerhalb des Toleranzbandes liegt. Dieses verzögerte Schalten führt, insbesondere bildlich gesprochen, zu einer virtuellen Vergrößerung des Toleranzbandes.

Genau für solche Fälle wird vorgeschlagen, die Totzeit so zu wählen, dass das Toleranzband um nicht mehr als 25 Prozent virtuell vergrößert wird.

Dies bedeutet insbesondere auch, dass bei Überschreiten dieser Grenze, die entsprechende Schalthandlung vorgenommen wird.

Insoweit wird also insbesondere auch vorgeschlagen, die Totzeit nicht allzu groß zu wählen und bevorzugt nur eine sehr kurze Zeit abzuwarten, insbesondere um festzustellen, ob sich der Ist-Strom von alleine innerhalb des Toleranzbandes fängt. Fängt sich der Ist-Strom nicht von alleine innerhalb des Toleranzbandes, wird die entsprechende Schalthandlung um die Totzeit verzögert bzw. verspätet vorgenommen.

Vorzugsweise ist die Totzeit reglungstechnisch implementiert.

Es wird also insbesondere vorgeschlagen, die Totzeit in einer Regelung zu implementieren, bspw. in einer entsprechenden Steuersoftware.

Dies kann bspw. dadurch erfolgen, dass die Steuereinheit an die Schaltmittel Signale übergibt, die sowohl Schaltsignale als auch die Totzeit umfassen.

Alternativ kann die Totzeit aber auch per Hardware implementiert werden, bspw. mittels RC-Glieder.

Bevorzugt beträgt die Totzeit zwischen 10 bis 100 µs.

Erfindungsgemäß wird ferner ein Stromrichter vorgeschlagen, insbesondere ein Umrichter einer Windenergieanlage, wenigstens umfassend: einen Wechselrichter mit einer Vielzahl von Schaltmitteln und eine Steuereinheit für den Wechselrichter, wobei die Steuereinheit dazu eingerichtet ist, ein vorstehend oder nachstehend beschriebenes Verfahren auszuführen.

Der Stromrichter ist somit insbesondere als Umrichter einer Windenergieanlage ausgebildet.

Der Stromrichter umfasst hierfür bspw. eine Vielzahl von Schaltmitteln, bspw. IGBTs, und eine Steuereinheit, die dazu eingerichtet ist, die Schaltmittel zu steuern, bspw. mittels eines Toleranzband- und/oder Hystereseverfahrens.

Die Steuereinheit ist hierfür bspw. über Signalleitungen mit den Schaltmitteln verbunden und dazu eingerichtet, Signale an die Schaltmittel zu übergeben, insbesondere umfassend ein Schaltsignal und eine Totzeit.

In einer besonders bevorzugten Ausführungsform wird die Totzeit mittels eines Beobachters, bevorzugt eines Zustandsbeobachters, bspw. nach Kalmann bzw. mittels des Kalman-Kriteriums, im laufenden Betrieb des Stromrichters eingestellt.

Zudem ist die Steuereinheit dazu eingerichtet, ein Computerprogrammprodukt, insbesondere eine Software, auszuführen, welches sowohl das Schaltsignal als auch die Totzeit bestimmt.

Ferner ist die Steuereinheit dazu eingerichtet, die Schaltmittel mittels eines Toleranzband- und/oder Hystereseverfahrens anzusteuern.

Vorzugsweise ist der Stromrichter als Leistungsumrichter einer Windenergieanlage ausgebildet.

Der Stromrichter ist also insbesondere dazu eingerichtet und wird dazu verwendet, die von einem Generator der Windenergieanlage erzeugte elektrische Leistung in ein elektrisches Versorgungsnetz einzuspeisen.

Vorzugsweise umfassen die Schaltmittel wenigstens einen IGBT und/oder sind als IGBT ausgebildet.

Die Schaltmittel basieren somit insbesondere auf Halbleiterelementen, die dazu eingerichtet sind, hohe Ströme zu führen.

Erfindungsgemäß wird ferner eine Windenergieanlage vorgeschlagen, umfassend wenigstens einen vorstehend oder nachstehend beschriebenen Stromrichter, wobei der Stromrichter als Leistungsumrichter ausgebildet ist, und insbesondere dazu eingerichtet ist, eine von der Windenergieanlage erzeugte elektrische Leistung in ein elektrisches Versorgungsnetz einzuspeisen.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt einen schematischen Aufbau eines elektrischen Stranges einer Windenergieanlage zum Einspeisen eines elektrischen Wechselstroms gemäß einer Ausführungsform.
- Fig. 3: zeigt schematisch den Aufbau eines Stromrichters zum Erzeugen eines elektrischen dreiphasigen Wechselstroms mittels eines Toleranzbandverfahrens gemäß einer Ausführungsform.
- Fig. 4: zeigt den Ablauf eines üblichen Verfahrens zum Steuern eines Stromrichters mittels eines Toleranzbandverfahrens (Stand der Technik).
- Fig. 5: zeigt den Ablauf eines erfindungsgemäßen Verfahren zum Steuern eines Stromrichters mittels eines Toleranzbandverfahrens.

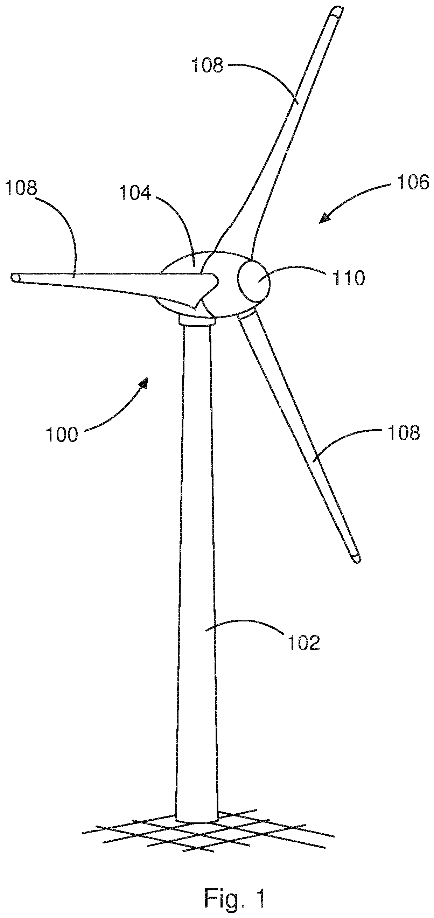

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Der Generator ist ferner mit einem vorstehend oder nachstehend beschriebenen Stromrichter verbunden, der die vom Generator erzeugte elektrische Leistung in ein elektrisches Versorgungsnetz, insbesondere in ein elektrisches Windparknetz, einspeist.

Zum Betreiben der Windenergieanlage, und insbesondere des Stromrichters, ist ferner eine vorstehend oder nachstehend beschriebene Steuereinheit vorgesehen.

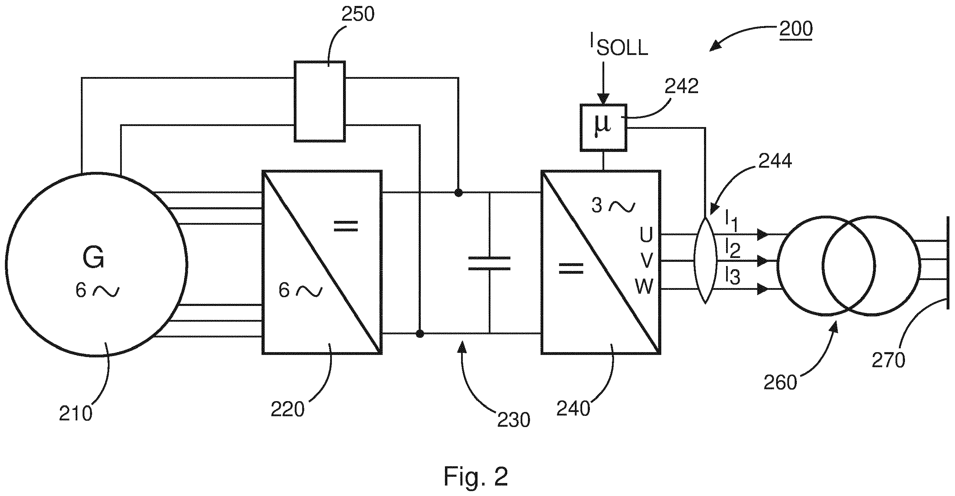

Fig. 2 zeigt vereinfacht einen elektrischen Strang 200 einer in Fig. 1 gezeigten Windenergieanlage.

Der elektrische Strang 200 weist einen 6-phasigen Ringgenerator 210 auf, der durch den Wind über einen mechanischen Antriebsstrang der Windenergieanlage in Drehbewegung versetzt wird, um einen 6-phasigen elektrischen Wechselstrom zu erzeugen.

Der 6-phasige elektrische Wechselstrom wird vom Generator 210 an den Gleichrichter 220 übergeben, der über einen Gleichspannungszwischenkreis 230 mit dem 3-phasigen Wechselrichter 240 verschaltet ist. Der 6-phasige Ringgenerator 210, der als Synchrongenerator ausgebildet ist, wird dabei über die Erregung 250 aus dem Gleichspannungszwischenkreis 230 elektrisch erregt.

Der elektrische Strang 200 weist somit ein Vollumrichter-Konzept auf, bei dem mittels des 3-phasigen Wechselrichters 240 über den Windenergieanlagentransformator 260 in das Netz 270 eingespeist wird.

Solche Umrichter, die, eine vom Generator der Windenergieanlage erzeugte elektrische Leistung in ein elektrisches Versorgungsnetz einspeisen, werden üblicherweise auch als Leistungsumrichter bezeichnet.

Bei dem Netz 270 handelt es sich üblicherweise um ein elektrisches Windparknetz, welches über einen Windparktransformator in ein elektrisches Versorgungsnetz einspeist. Es kommt aber auch eine direkte Einspeisung direkt in das elektrische Versorgungsnetz in Betracht.

Zum Erzeugen des dreiphasigen Stromes I1, I2, I3 für jede der Phasen U, V, W wird der Wechselrichter 240 mit einem Toleranzbandverfahren gesteuert.

Die Steuerung erfolgt dabei über die Steuereinheit 242, die mittels einer Stromerfassung 244 jeden der drei durch den Wechselrichter 240 erzeugten Ströme I1, I2, I3 erfasst.

Der Steuereinheit 242 ist somit insbesondere dazu eingerichtet, mittels der Stromerfassung 244 jede Phase des Wechselrichters einzeln zu steuern. Hierfür kann die Steuereinheit 242 bspw. einen Strom-Sollwert Isoll von der Windenergieanlagensteuerung empfangen, in dessen Abhängigkeit die jeweiligen Ströme I1, I2, I3 eingestellt werden.

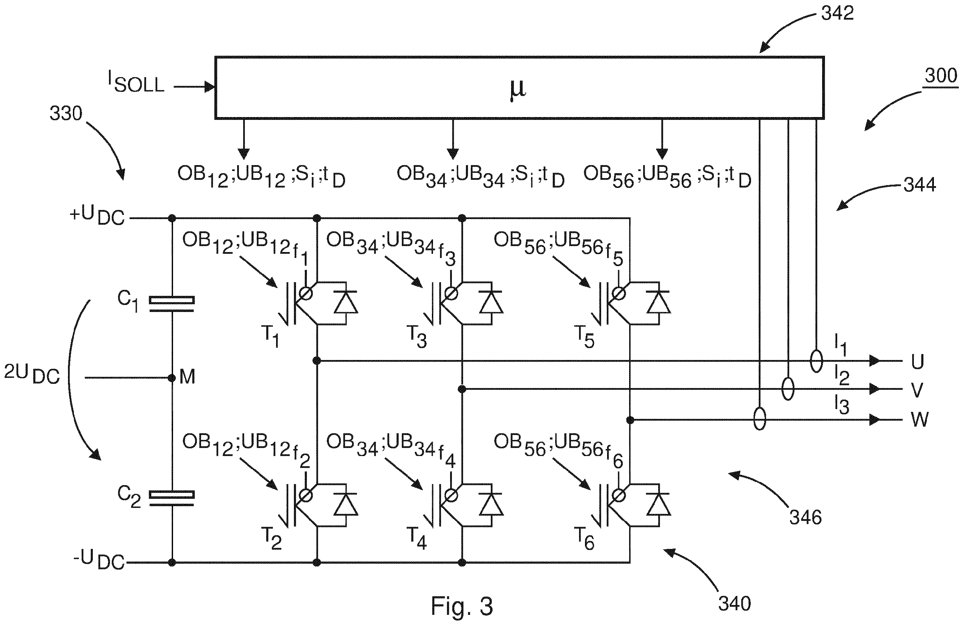

Fig. 3 zeigt schematisch den Aufbau eines Stromrichters 300, insbesondere des, in Fig. 2 gezeigten Wechselrichters 240, zum Erzeugen eines elektrischen dreiphasigen Wechselstroms mittels eines Toleranzbandverfahrens.

Der Stromrichter 300 ist als Wechselrichter ausgebildet und an einen Gleichspannungszwischenkreis 330 angeschlossen, der über einen Gleichrichter mit dem Generator einer Windenergieanlage verbunden ist.

Der Gleichspannungszwischenkreis 330 weist ein erstes Potential +U_{dc} und ein zweites Potential -U_{dc} mit einem Mittenabgriff M auf, der dazu eingerichtet ist, mit einer Filtereinrichtung verschaltet zu werden, um beispielsweise einen am Ausgang 346 des Wechselrichters verschalteten Filter auf den Gleichspannungszwischenkreis 330 zurückzuführen.

Zudem ist zwischen dem Mittenabgriff M und den beiden Potentialen +U_{dc}, -U_{dc} jeweils ein Kondensator mit der Kapazität C1, C2 angeordnet, um Energie im Gleichspannungszwischenkreis 330 zu speichern und die Gleichspannung 2Udc entsprechend zu glätten.

Der Stromrichter 300, der mit dem Gleichspannungszwischenkreis 330 verschaltet ist, erzeugt für jede der drei Phasen U, V, W jeweils einen separaten Strom I1, I2, I3 am Ausgang 346 des Stromrichters 340. Der Stromrichter 340 weist hierfür für jede der drei Phasen U, V, W zwei Schaltmittel auf, nämlich jeweils einen Oberschalter T1, T3, T5 und einen Unterschalter T2, T4, T6, wobei die Ober- und Unterschalter T1, T2, T3, T4, T5, T6 insbesondere über die Steuereinheit mittels eines Toleranzbandverfahrens angesteuert werden.

Die Steuereinheit 342 selbst arbeitet mit einem stromgeführten Toleranzbandverfahren. Hierfür erfasst die Steuereinheit 342 die vom Wechselrichter 340 erzeugten Ströme I1, I2, I3 am Ausgang 346 des Stromrichters 340 mittels einer Stromerfassung 344. Die so erfassten Ströme I1, I2, I3 werden mit einem Soll-Wert Isoll verglichen, um die Bandgrenzen OB12, UB12, OB34, UB34, OB56, UB56 für Ober- und Unterschalter T1, T2, T3, T4, T5, T6 zu bestimmen.

Die Schaltmittel T1, T2, T3, T4, T5, T6 werden also durch die Steuereinheit 342 mittels Bandgrenzen OBi, UBi, Schaltsignalen Sᵢ und Totzeiten t_{D} angesteuert, insbesondere um einen dreiphasigen Strom I1, I2, I3 zu erzeugen.

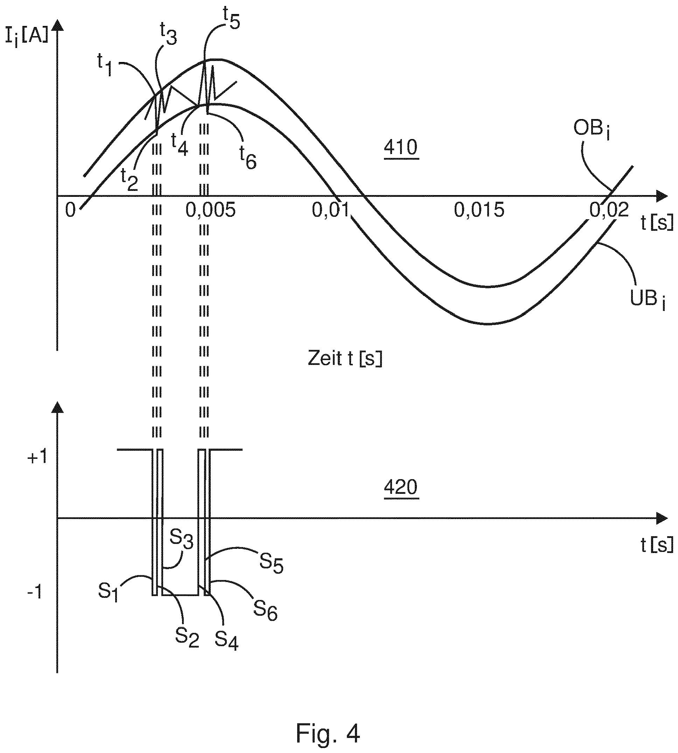

Fig. 4 zeigt den Ablauf 400 eines üblichen Verfahrens zum Steuern eines Stromrichters mittels eines Toleranzbandverfahrens (Stand der Technik).

In dem oberen Teil 410 der Figur 4 ist der Strom Iᵢ eines Schaltmittels über der Zeit t abgetragen und in dem unteren Teil 420 die dazu korrespondierenden Schalthandlungen Si.

Zum Zeitpunkt t1 überschreitet der Strom Iᵢ die obere Bandgrenze OBᵢ, woraufhin das Schaltmittel mittels der Schalthandlung S1 von +1 auf -1 schaltet.

Hierdurch kommt es zu einer Schaltspitze, die zum Zeitpunkt t2 zu einem Unterschreiten der unteren Bandgrenze UBi führt.

Hierdurch wird die Schalthandlung S2 vorgenommen, die wiederum zu einer Schaltspitze führt, die zum Zeitpunkt t3 wiederum zu einem Überschreiten der oberen Bandgrenze OBi führt.

Die Schalthandlung S1 löst also zwei weitere Schalthandlungen S2 und S3 aus.

Zu einem späteren Zeitpunkt t4 unterschreitet der Strom Iᵢ die untere Bandgrenze UBi woraufhin das Schaltmittel mittels der Schalthandlung S4 von -1 auf +1 schaltet.

Hierdurch kommt es wiederum zu einer Schaltspitze, die die Schalthandlungen S5 und S6 zu den Zeitpunkten t5 und t6 zur Folge hat.

Es werden also auch durch die Schalthandlung S4 zwei weitere Schalthandlungen S5 und S6 ausgelöst.

Bei üblichen Toleranzbandverfahren kann es also, bspw. durch, dem Stromrichter vor- oder nachgelagerte Schwingkreise, dazu kommen, dass verlustbehaftete und somit unnötige Schalthandlungen vorgenommen werden.

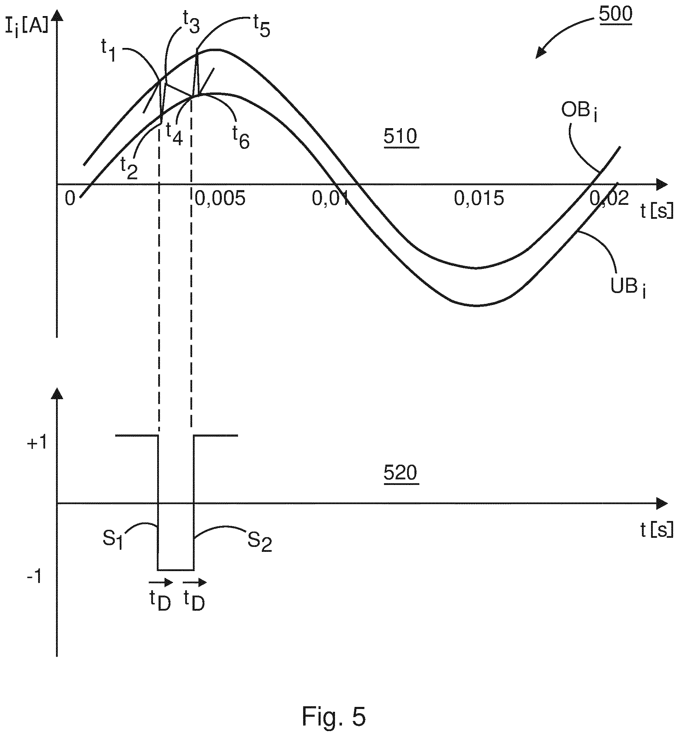

Fig. 5 zeigt den Ablauf eines erfindungsgemäßen Verfahren zum Steuern eines Stromrichters mittels eines Toleranzbandverfahrens, insbesondere zum Vermeiden unnötiger Schalthandlungen.

In dem oberen Teil 510 der Figur 5 ist der Strom Iᵢ eines Schaltmittels über der Zeit t abgetragen und in dem unteren Teil 520 die dazu korrespondierenden Schalthandlungen Si.

Zum Zeitpunkt t1 überschreitet der Strom Iᵢ die obere Bandgrenze Obᵢ, woraufhin das Schaltmittel mittels der Schalthandlung S1 von +1 auf -1 schaltet.

Hierdurch kommt es zu einer Schaltspitze, die zum Zeitpunkt t2 zu einem Unterschreiten der unteren Bandgrenze UBi führt.

Das Unterschreiten der unteren Bandgrenze UBi würde normalerweise eine weitere Schalthandlung zur Folge haben, wie bspw. in Fig. 4 gezeigt.

Durch die erfindungsgemäße Totzeit t_{D} wird diese Schalthandlung aber unterdrückt.

Die Schaltspitze verschwindet zum Zeitpunkt t3 wieder, sodass sich der Strom weiterhin innerhalb des Toleranzbandes OBi, UBi bewegt.

Zu einem späteren Zeitpunkt t4 unterschreitet der Strom Iᵢ die untere Bandgrenze UBi woraufhin das Schaltmittel mittels der Schalthandlung S4 von -1 auf +1 schaltet.

Hierdurch kommt es wiederum zu einer Schaltspitze, die üblicherweise weitere Schalthandlungen zu den Zeitpunkten t5 und t6 zur Folge hätte, wie bspw. in Figur 4 gezeigt.

Diese weiteren Schalthandlungen werden aber ebenfalls durch die Totzeit t_{D} abermals unterdrückt.

Die Erfindung vermeidet also durch eine zusätzliche Totzeit t_{D} unnötige weitere Schalthandlungen, wie ein Vergleich zu Figur 4 zeigt.

Es wird also insbesondere vorgeschlagen, dass die Regelung kurzzeitig abwartet, welchen Verlauf der Strom nimmt. Erst nach Ablauf der Totzeit werden ggf. weitere Schalthandlungen durchgeführt.

Diesbezüglich wird insbesondere auch vorgeschlagen, dass sofern sich nach Ablauf der Totzeit t_{D} der Strom außerhalb des Toleranzbandes OBi, UBi befindet, weitere Schalthandlungen vorgenommen werden, die den Strom wieder zurück in das Toleranzband OBi, UBi führen.

### Bezuqszeichenliste

- 100: Windenergieanlage
- 102: Turm, insbesondere der Windenergieanlage
- 104: Gondel, insbesondere der Windenergieanlage
- 106: aerodynamischer Rotor, insbesondere der Windenergieanlage
- 108: Rotorblatt, insbesondere der Windenergieanlage
- 110: Spinner, insbesondere der Windenergieanlage
- 200: elektrischer Strang, insbesondere der Windenergieanlage
- 210: Generator, insbesondere der Windenergieanlage
- 220: Gleichrichter, insbesondere der Windenergieanlage
- 230: Gleichspannungszwischenkreis, insbesondere der Windenergieanlage
- 240: Wechselrichter, insbesondere der Windenergieanlage
- 242: Steuereinheit, insbesondere des Wechselrichters
- 244: Stromerfassung, insbesondere des Wechselrichters
- 250: Erregung, insbesondere des Generators
- 260: Transformator, insbesondere der Windenergieanlage
- 270: elektrisches Netz
- 300: Stromrichter, insbesondere Wechselrichter
- 330: Gleichspannungszwischenkreis, insbesondere für den Stromrichter
- 342: Steuereinheit, insbesondere des Stromrichters
- 344: Stromerfassung, insbesondere des Stromrichters
- 346: Ausgang, insbesondere des Stromrichters
- 400: Ablauf eines üblichen Verfahrens (Stand der Technik)
- 500: Ablauf eines erfindungsgemäßen Verfahrens

- Iᵢ: Strom
- t: Zeit
- t_{D}: Totzeit
- Sᵢ: Schalthandlungen

- I1, I2, I3: dreiphasiger Wechselstrom, insbesondere der Windenergieanlage

- T1, ..., T6: Schaltmittel, insbesondere des Stromrichters
- T1, T3, T5: Oberschalter, insbesondere des Stromrichters
- T2, T4, T6: Unterschalter, insbesondere des Stromrichters
- OBᵢ: obere Bandgrenze
- OB12: obere Bandgrenze, insbesondere für das erste und zweite Schaltmittel
- OB34: obere Bandgrenze, insbesondere für das dritte und vierte Schaltmittel
- OB56: obere Bandgrenze, insbesondere für das fünfte und sechste Schaltmittel
- UBi: untere Bandgrenze
- UB12: untere Bandgrenze, insbesondere für das erste und zweite Schaltmittel
- UB34: untere Bandgrenze, insbesondere für das dritte und vierte Schaltmittel
- UB56: untere Bandgrenze, insbesondere für das fünfte und sechste Schaltmittel

- U, V, W: Phasen des elektrischen Netzes

- U_{dc}: Zwischenkreisspannung, insbesondere des Gleichspannungszwischenkreises
- +U_{dc}: erstes Potential, insbesondere des Gleichspannungszwischenkreises
- -U_{dc}: zweites Potential, insbesondere des Gleichspannungszwischenkreises

## Patentansprüche

1. Verfahren zum Steuern eines Stromrichters, insbesondere eines Wechselrichters, bevorzugt eines Umrichters, umfassend einen Wechselrichter, insbesondere einer Windenergieanlage, umfassend die Schritte:
- Vorgeben eines Toleranzbandes mit wenigstens einer Bandgrenze für den Stromrichter, insbesondere für ein Schaltmittel des Stromrichters,
- Vorgeben einer Verzögerung umfassend eine Totzeit, insbesondere für das Schaltmittel des Stromrichters,
- Erfassen eines Ist-Stromes des Stromrichters, insbesondere eines Ist-Stromes des Schaltmittels des Stromrichters,
- Abgleichen des erfassten Ist-Stromes mit der Bandgrenze, um ein Verlassen des Toleranzbandes festzustellen,
- Schalten des Stromrichters, insbesondere des Schaltmittels des Stromrichters, um innerhalb des Toleranzbandes zu gelangen,
- Unterdrücken weiterer, insbesondere nicht-systemrelevanter, Schalthandlungen des Stromrichters, insbesondere des Schaltmittels, für die vorgegebene Totzeit.

2. Verfahren zum Steuern eines Stromrichters nach Anspruch 1, wobei:
- die Totzeit größer gewählt wird als eine Zeitkonstante eines generator- oder netzseitigen Schwingkreises des Stromrichters.

3. Verfahren zum Steuern eines Stromrichters nach Anspruch 1 oder 2, wobei:
- die Totzeit kleiner gewählt wird als eine Zeitkonstante, die zu einer virtuellen Vergrößerung des Toleranzbandes um mehr als 10 Prozent, insbesondere 15 Prozent, 25 Prozent, führt.

4. Verfahren zum Steuern eines Stromrichters nach wenigstens einem der vorstehenden Ansprüche, wobei:
- die Totzeit reglungstechnisch implementiert ist.

5. Stromrichter, insbesondere Umrichter einer Windenergieanlage, wenigstens umfassend:
- eine Vielzahl von Schaltmitteln und
- eine Steuereinheit, wobei
- die Steuereinheit dazu eingerichtet ist, ein Verfahren nach einem der Ansprüche 1 bis 4 auszuführen.

6. Stromrichter nach Anspruch 5, wobei der Stromrichter
- als Leistungsumrichter einer Windenergieanlage ausgebildet ist.

7. Stromrichter nach Anspruch 5 oder 6, wobei
- die Schaltmittel wenigstens einen IGBT umfassen und/oder als IGBT ausgebildet sind.

8. Windenergieanlage umfassend wenigstens
- einen Stromrichter nach einem der Ansprüche 5 bis 7, wobei der Stromrichter als Leistungsumrichter ausgebildet ist, und insbesondere dazu eingerichtet ist, eine von der Windenergieanlage erzeugte elektrische Leistung in ein elektrisches Versorgungsnetz einzuspeisen.
